# EUROPEAN PATENT APPLICATION

(11) **EP 4 535 908 A1**
(43) Date of publication of application: **09.04.2025**
(21) Application number: 23810745.2
(22) Date of filing: 26.04.2023
(51) Int. Cl.: H04W 74/00

(54) **CONTROL CHANNEL TRANSMISSION METHOD, COMMUNICATION DEVICE, APPARATUS, AND STORAGE MEDIUM**

(30) Priority: 26.05.2022 CN 202210590306
(71) Applicant: Datang Mobile Communications Equipment Co., Ltd., Beijing 100085 (CN)
(72) Inventor: CHEN, Li, Beijing 100085 (CN); CHENG, Fang-chen, Beijing 100085 (CN)
(74) Representative: Studio Torta S.p.A.
(86) International application number: PCT/CN2023/090890
(87) International publication number: WO 2023/226672

(57) **Abstract**

Embodiments of the present disclosure provide a control channel transmission method, a communication device, an apparatus, and a storage medium, wherein the method is applied to a first communication device. The method comprises: receiving a synchronization sequence sent by a second communication device; synchronizing with the second communication device on the basis of the synchronization sequence; and receiving a control channel message sent by the second communication device. According to the control channel transmission method, the communication device, the apparatus, and the storage medium provided by the embodiments of the present disclosure, the second communication device can send the synchronization sequence before sending the control channel message, such that the first communication device executes, only when the control channel message needs to be received, the synchronization process without keeping the synchronization with the second communication device all the time, thereby reducing the power consumption of the first communication device; moreover, the first communication device can also be made to quickly establish a synchronization with the second communication device and receive the control channel message, such that a low-complexity quick access process is achieved.

## Description

### CROSS-REFERENCES TO RELATED APPLICATIONS

The present application claims priority to Chinese patent application No. 202210590306.1 filed on May 26, 2022, entitled "Control Channel Transmission Method, Communication Device, Apparatus, and Storage Medium", which is hereby incorporated by reference in its entirety.

### FIELD

The present application relates to the field of communications, and in particular, to methods and apparatuses for transmitting control channel, communication devices and a storage medium.

### BACKGROUND

Synchronization is an important basis for the normal operation of any communication system. Transmission between a base station and a terminal should be carried out in case of transmission signal synchronization (including downlink synchronization and uplink synchronization).

In the related art, a terminal needs to be synchronized with the base station in a connected state to ensure that downlink signaling and transmission may be correctly received at any time, which would cause the terminal to consume more power and reduce an endurance capability of the terminal.

### BRIEF SUMMARY

In view of the above problems, embodiments of the present application provide methods and apparatuses for transmitting control channel, communication devices and a storage medium.

An embodiment of the present application provides a method for transmitting control channel, performed by a first communication device, including:
receiving a synchronization sequence transmitted from a second communication device;
synchronizing with the second communication device based on the synchronization sequence; and
receiving a control channel message transmitted from the second communication device.

In an embodiment, the synchronization sequence transmitted from the second communication device includes one or more pieces of the following information:
an identifier of the first communication device and/or an identifier of the second communication device; or
frequency resource occupancy information of the second communication device.

In an embodiment, receiving the synchronization sequence transmitted from the second communication device includes:
receiving a synchronization sequence and a control channel message continuously transmitted from the second communication device in a time domain.

In an embodiment, receiving the synchronization sequence transmitted from the second communication device includes:
receiving a first synchronization sequence transmitted from the second communication device, where the first synchronization sequence includes frequency resource occupancy information of the second communication device; and
receiving the control channel message transmitted from the second communication device includes:
   transmitting a second synchronization sequence to the second communication device, where the second synchronization sequence includes feedback information of the first communication device on the frequency resource occupancy information of the second communication device; and
   receiving the control channel message transmitted from the second communication device.

In an embodiment, the control channel message includes one or more pieces of the following information:
resource scheduling information;
pre-configured resource information;
indication information of a hybrid automatic repeat request-acknowledgment (HARQ-ACK) feedback resource of a peer end;
hybrid automatic repeat request-acknowledgment (HARQ-ACK) feedback information; or
channel state information (CSI) feedback information.

In an embodiment, the first communication device includes a terminal whose peer end transmission entity is a base station, or a reception terminal whose peer end transmission entity is a transmission terminal.

An embodiment of the present application further provides a method for transmitting control channel, performed by a second communication device, including:
determining a synchronization sequence;
transmitting the synchronization sequence to a first communication device, where the synchronization sequence is used for synchronizing the first communication device with the second communication device; and
transmitting a control channel message to the first communication device.

In an embodiment, the synchronization sequence transmitted to the first communication device includes one or more pieces of the following information:
an identifier of the first communication device and/or an identifier of the second communication device; or
frequency resource occupancy information of the second communication device.

In an embodiment, transmitting the synchronization sequence to the first communication device includes:
transmitting the synchronization sequence and a control channel message continuously to the first communication device in a time domain.

In an embodiment, transmitting the synchronization sequence to the first communication device includes:
transmitting a first synchronization sequence to the first communication device, where the first synchronization sequence includes frequency resource occupancy information of the second communication device; and
transmitting the control channel message to the first communication device includes:
   receiving a second synchronization sequence transmitted from the first communication device, where the second synchronization sequence includes feedback information of the first communication device on the frequency resource occupancy information of the second communication device; and
   transmitting the control channel message to the first communication device based on the second synchronization sequence.

In an embodiment, the control channel message includes one or more pieces of the following information:
resource scheduling information;
pre-configured resource information;
indication information of a hybrid automatic repeat request-acknowledgment (HARQ-ACK) feedback resource of a peer end;
hybrid automatic repeat request-acknowledgment (HARQ-ACK) feedback information; or
channel state information (CSI) feedback information.

In an embodiment, the second communication device includes a base station or a terminal.

An embodiment of the present application further provides a first communication device, including a memory, a transceiver and a processor,
where the memory is used for storing a computer program, the transceiver is used for receiving and transmitting data under control of the processor, and the processor is used for reading the computer program in the memory and performing the following operations of:
receiving a synchronization sequence transmitted from a second communication device;
synchronizing with the second communication device based on the synchronization sequence; and
receiving a control channel message transmitted from the second communication device.

In an embodiment, the synchronization sequence transmitted from the second communication device includes one or more pieces of the following information:
an identifier of the first communication device and/or an identifier of the second communication device; or
frequency resource occupancy information of the second communication device.

In an embodiment, receiving the synchronization sequence transmitted from the second communication device includes:
receiving a synchronization sequence and a control channel message continuously transmitted from the second communication device in a time domain.

In an embodiment, receiving the synchronization sequence transmitted from the second communication device includes:
receiving a first synchronization sequence transmitted from the second communication device, where the first synchronization sequence includes frequency resource occupancy information of the second communication device; and
receiving the control channel message transmitted from the second communication device includes:
   transmitting a second synchronization sequence to the second communication device, where the second synchronization sequence includes feedback information of the first communication device on the frequency resource occupancy information of the second communication device; and
   receiving the control channel message transmitted from the second communication device.

In an embodiment, the control channel message includes one or more pieces of the following information:
resource scheduling information;
pre-configured resource information;
indication information of a hybrid automatic repeat request-acknowledgment (HARQ-ACK) feedback resource of a peer end;
hybrid automatic repeat request-acknowledgment (HARQ-ACK) feedback information; or
channel state information (CSI) feedback information.

In an embodiment, the first communication device includes a terminal whose peer end transmission entity is a base station, or a reception terminal whose peer end transmission entity is a transmission terminal.

An embodiment of the present application further provides a second communication device, including a memory, a transceiver and a processor,
where the memory is used for storing a computer program, the transceiver is used for receiving and transmitting data under control of the processor, and the processor is used for reading the computer program in the memory and performing the following operations of:
determining a synchronization sequence;
transmitting the synchronization sequence to a first communication device, where the synchronization sequence is used for synchronizing the first communication device with the second communication device; and
transmitting a control channel message to the first communication device.

In an embodiment, the synchronization sequence transmitted to the first communication device includes one or more pieces of the following information:
an identifier of the first communication device and/or an identifier of the second communication device; or
frequency resource occupancy information of the second communication device.

In an embodiment, transmitting the synchronization sequence to the first communication device includes:
transmitting the synchronization sequence and a control channel message continuously to the first communication device in a time domain.

In an embodiment, transmitting the synchronization sequence to the first communication device includes:
transmitting a first synchronization sequence to the first communication device, where the first synchronization sequence includes frequency resource occupancy information of the second communication device; and
transmitting the control channel message to the first communication device includes:
   receiving a second synchronization sequence transmitted from the first communication device, where the second synchronization sequence includes feedback information of the first communication device on the frequency resource occupancy information of the second communication device; and
   transmitting the control channel message to the first communication device based on the second synchronization sequence.

In an embodiment, the control channel message includes one or more pieces of the following information:
resource scheduling information;
pre-configured resource information;
indication information of a hybrid automatic repeat request-acknowledgment (HARQ-ACK) feedback resource of a peer end;
hybrid automatic repeat request-acknowledgment (HARQ-ACK) feedback information; or
channel state information (CSI) feedback information.

In an embodiment, the second communication device includes a base station or a terminal.

An embodiment of the present application further provides an apparatus for transmitting control channel, applied to a second communication device, including:
a first receiving unit, used for receiving a synchronization sequence transmitted from a second communication device;
a synchronizing unit, used for synchronizing with the second communication device based on the synchronization sequence; and
a second receiving unit, used for receiving a control channel message transmitted from the second communication device.

An embodiment of the present application further provides an apparatus for transmitting control channel, applied to a second communication device, including:
a determining unit, used for determining a synchronization sequence;
a first transmitting unit, used for transmitting the synchronization sequence to a first communication device, where the synchronization sequence is used for synchronizing the first communication device with the second communication device; and
a second transmitting unit, used for transmitting a control channel message to the first communication device.

An embodiment of the present application further provides a computer-readable storage medium storing a computer program that causes a computer to perform the methods for transmitting control channel described above.

An embodiment of the present application further provides a communication device storing a computer program that causes the communication device to perform the methods for transmitting control channel described above.

An embodiment of the present application further provides a processor-readable storage medium storing a computer program that causes a processor to perform the methods for transmitting control channel described above.

An embodiment of the present application further provides a chip product storing a computer program that causes the chip product to perform the methods for transmitting control channel described above.

In the methods and apparatuses for transmitting control channel, the communication devices, and the storage medium provided by the embodiment of the present application, the second communication device may transmit the synchronization sequence before transmitting the control channel message, the first communication device may perform the synchronization procedure only when it needs to receive the control channel message, and does not need to be synchronized with the second communication device all the time, which may reduce the power consumption of the device. In addition, the first communication device is able to quickly establish synchronization with the second communication device and receive the control channel message, which achieves a low-complexity fast access procedure.

### BRIEF DESCRIPTION OF THE DRAWINGS

In order to illustrate solutions disclosed in the embodiments of the present application or the related art more clearly, the drawings used in the descriptions of the embodiments or the related art are briefly described below. The drawings in the following description are certain embodiments of the present application, and other drawings may be obtained according to these drawings without any creative work for those skilled in the art.
FIG. 1 is a first schematic flowchart of a method for transmitting control channel according to an embodiment of the present application;
FIG. 2 is a schematic diagram of a control channel design according to an embodiment of the present application;
FIG. 3 is a schematic diagram of a control channel in a central control mode according to an embodiment of the present application;
FIG. 4 is a schematic diagram of a control channel in a distributed control mode according to an embodiment of the present application;
FIG. 5 is a second schematic flowchart of a method for transmitting control channel according to an embodiment of the present application;
FIG. 6 is a schematic structural diagram of a first communication device according to an embodiment of the present application;
FIG. 7 is a schematic structural diagram of a second communication device according to an embodiment of the present application;
FIG. 8 is a first schematic structural diagram of an apparatus for transmitting control channel according to an embodiment of the present application; and
FIG. 9 is a second schematic structural diagram of an apparatus for transmitting control channel according to an embodiment of the present application.

### DETAILED DESCRIPTION

In embodiments of the present application, the term "and/or" describes a related relationship of associated objects, and indicates that there can be three kinds of relationships. For example, A and/or B can represent that A exists alone, A and B exist simultaneously, and B exists alone. Character "/" generally indicates that the associated objects have an "or" relationship.

In embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

Some contents associated with embodiments of the present application are firstly introduced to understand solutions of the embodiments of the present application more clearly.

In a 5G new radio (NR) system, downlink synchronization, uplink synchronization, and scheduling transmission are independent procedures.

In a downlink direction, a terminal needs to firstly monitor a synchronization signal/physical broadcast channel block (SSB), and achieve downlink synchronization by measuring a primary synchronization signal (PSS) and a secondary synchronization signal (SSS). The SSB may only be transmitted periodically within a certain time window, which means that the terminal may only achieve downlink synchronization within a certain time. Therefore, the terminal needs to keep downlink synchronization in a connected state to ensure that downlink signaling and transmission may be correctly received at any time.

For uplink synchronization, 5G uplink synchronization is jointly maintained by the base station and the terminal. During a random access procedure, the base station calculates the uplink synchronization timing required for the terminal to transmit the uplink signal by measuring the random access request (uplink), and includes a timing advance command (TAC) in the random access response (downlink). After receiving the TAC, the terminal performs an uplink timing synchronization adjustment. In case that the terminal is synchronized with the base station, the base station still needs to detect the uplink synchronization for the terminal, determine the synchronization timing adjustment amount required by the terminal by measuring the uplink transmission signal and uplink transmission data from the terminal, and transmit the TAC to the terminal, and the terminal performs an uplink timing synchronization adjustment accordingly.

In case of keeping synchronization in both uplink and downlink, the terminal may achieve data transmission with the base station by monitoring a physical downlink control channel (PDCCH) and parsing a downlink or uplink scheduling command in the PDCCH on a control resource set (CORESET) configured by the base station.

In case that the downlink synchronization, uplink synchronization, and scheduling transmission procedures are independent of each other in the traditional NR system, the terminal needs to maintain synchronization with the base station in the connected state to ensure that the downlink or uplink scheduling command of the base station may be correctly received at any time and data transmission between terminal and the base station is achieved, which would cause the terminal to consume a lot of power and reduce the endurance capability of the terminal.

In view of the above problems, embodiments of the present application provide a new solution for designing control channel, which may achieve fast synchronization, scheduling and transmission through the transmission and monitoring of the control channel. As such, not only power saving of terminal may be achieved, but also a low-complexity terminal fast access procedure may be achieved.

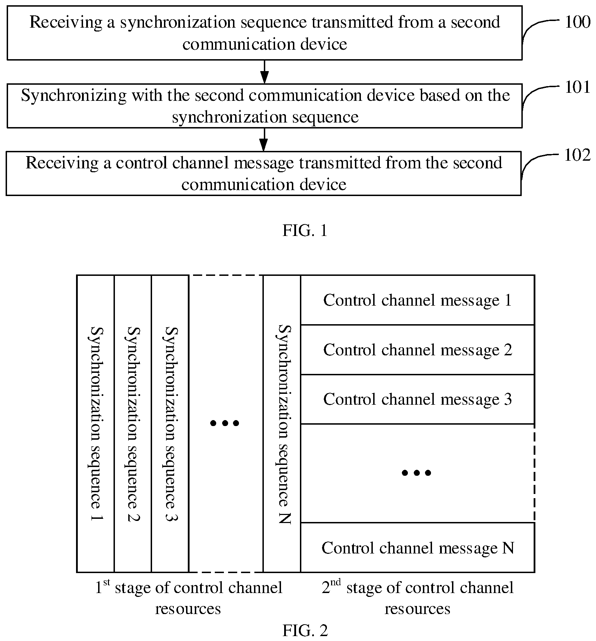

FIG. 1 is a first schematic flowchart of a method for transmitting control channel according to an embodiment of the present application. The method is performed by a first communication device. As shown in FIG. 1, the method includes the following steps.

Step 100: receiving a synchronization sequence transmitted from a second communication device.

Step 101: synchronizing with the second communication device based on the synchronization sequence.

Step 102: receiving a control channel message transmitted from the second communication device.

In an embodiment, the first communication device may include a terminal whose peer end transmission entity is a base station, or a reception terminal whose peer end transmission entity is a transmission terminal.

In an embodiment, the second communication device may include a base station or a terminal.

In an embodiment, the base station may be an access point (AP) with an access network side function.

In an embodiment, the second communication device may transmit a synchronization sequence before transmitting the control channel message in case that it needs to transmit a control channel message to the first communication device. The synchronization sequence may be used for synchronizing the first communication device with the second communication device, the first communication device may synchronize with the second communication device based on the received synchronization sequence and receive the control channel message.

In an embodiment, taking the first communication device being a terminal and the second communication device being a base station as an example, the base station may include a synchronization sequence in the downlink control channel. After receiving the synchronization sequence transmitted from the base station in the downlink control channel, the terminal may perform downlink synchronization based on the synchronization sequence and receive the control channel message.

In an embodiment, taking the first communication device being a terminal and the second communication device being a terminal, that is, a sidelink communication scenario between terminals as an example, a transmission terminal may transmit a control channel including a synchronization sequence to a reception terminal. After receiving the control channel, the reception terminal may synchronize with the transmission terminal based on the synchronization sequence in the control channel and receive the control channel message.

FIG. 2 is a schematic diagram of a control channel design according to an embodiment of the present application. As shown in FIG. 2, the control channel may include two basic stages: a synchronization sequence and a control channel message. In this figure, the first stage of the control channel includes multiple synchronization sequences with different indexes, and the second stage of the control channel includes multiple control channel messages with different indexes. The synchronization sequences and control channel messages with the same index correspond to each other. For example, synchronization sequence 1 corresponds to control channel message 1, synchronization sequence 2 corresponds to control channel message 2, ..., synchronization sequence N corresponds to control channel message N. The synchronization sequence is used for achieving synchronization between the first communication device and the second communication device; the control channel message is used for transmission of control information (such as resource scheduling information, etc.), and a cyclic redundancy check (CRC) procedure may be optionally added.

In an embodiment, the synchronization sequence transmitted from the second communication device may include one or more pieces of the following information.

### (1) An identifier (ID) of the first communication device and/or an identifier of the second communication device

In an embodiment, the identifier of the first communication device and/or the identifier of the second communication device may be used for identifying a transmitter device and/or a receiver device for the synchronization sequence. The identifier may be a full or truncated identifier, such as a full or truncated ID of the base station and/or ID of the terminal (also collectively referred to as AP ID). The first communication device may determine the transmitter device and/or the receiver device for the synchronization sequence based on the identifier of the first communication device and/or the identifier of the second communication device included in the synchronization sequence.

In an embodiment, the synchronization sequence may or may not include the identifier of the first communication device and/or the identifier of the second communication device. Taking the base station transmitting the synchronization sequence to the terminal as an example, there may be possible implementations as follows.

For example, in case that the base station transmits a broadcast message, the synchronization sequence is a sequence corresponding to the broadcast message, and the synchronization sequence may not include the ID of the base station and the ID of the terminal.

For example, in case that the terminal needs to learn which base station transmits the control channel, the synchronization sequence may include the ID of the base station and the ID of the terminal (the ID of the base station and the ID of the terminal may be full or truncated IDs).

For example, in case that the terminal does not need to learn which base station transmits the control channel, the synchronization sequence may only include the ID of the terminal (the ID of the terminal may be full or truncated IDs).

### (2) Frequency resource occupancy information of the second communication device

In an embodiment, the frequency resource occupancy information of the second communication device may be used for indicating all available uplink and downlink frequency resources of the second communication device. In case that the synchronization sequence includes the frequency resource occupancy information, the first communication device may determine the frequency resources occupied by the second communication device based on the frequency resource occupancy information to receive the subsequent control channel message.

In an embodiment, the terminal side may also transmit the terminal side information to the base station side using a same control channel format as the base station side. As such, the synchronization sequence stage transmitted from the terminal side may mainly include information on the ID of the terminal, which is used for the base station to identify the terminal. The synchronization sequence may also be used by the base station to measure and estimate the uplink synchronization timing deviation and determine whether uplink synchronization adjustment is required.

In an embodiment, the control channel message may include one or more pieces of the following information.

### (1) Resource scheduling information

In an embodiment, the resource scheduling information may be used for indicating time-frequency domain resources occupied by the second communication device performing transmission to the first communication device, a transmission format and other information, or for indicating time-frequency domain resources occupied by the first communication device for performing transmission to the second communication device, a transmission format and other information.

For example, the resource scheduling information may be downlink resource scheduling information transmitted from the base station to the terminal, which may be used for indicating time-frequency domain resources occupied by the base station for performing transmission to the terminal, a transmission format, etc. The terminal may receive the downlink transmission from the base station based on the resource scheduling information.

For example, the resource scheduling information may be uplink resource scheduling information transmitted from the terminal to the base station, which may be used for indicating time-frequency domain resources occupied by the terminal for performing transmission to the base station, a transmission format, etc. The terminal may transmit the uplink transmission to the base station based on the resource scheduling information.

### (2) Pre-configured resource information

In an embodiment, the pre-configured resource information may be used for indicating data transmission resources reserved by the second communication device for the first communication device.

For example, the pre-configured resource information transmitted from the base station to the terminal may be used for indicating data transmission resources pre-configured by the base station for the terminal.

### (3) Indication information of a hybrid automatic repeat request-acknowledgment (HARQ-ACK) feedback resource of a peer end

In an embodiment, the indication information of the HARQ-ACK feedback resource of the peer end may be used for indicating a transmission resource (such as a time offset, or a time domain resource, or a time-frequency domain resource, etc.) used by the first communication device to feed back the HARQ-ACK.

For example, in case that the second communication device requires the first communication device to transmit HARQ-ACK feedback, the second communication device may carry the indication information of the above HARQ-ACK feedback resource in the control channel message, and the first communication device may perform HARQ-ACK feedback on the transmission resource indicated by the indication information.

### (4) HARQ-ACK feedback information

In an embodiment, the HARQ-ACK feedback information may be used for indicating the HARQ-ACK feedback of the second communication device to the transmission transmitted from the first communication device.

For example, after receiving the uplink or downlink transmission transmitted from the first communication device, the second communication device may carry the HARQ-ACK feedback information in the control channel message to indicate the HARQ-ACK feedback of the second communication device to the uplink or downlink transmission transmitted from the first communication device.

### (5) Channel state information (CSI) feedback information

In an embodiment, the CSI feedback information may be used for indicating the CSI fed back by the second communication device to the first communication device.

For example, after performing channel quality measurement, the second communication device may transmit a control channel to the first communication device. The control channel includes a synchronization sequence and a control channel message. The control channel message includes CSI feedback information. After receiving the control channel transmitted from the second communication device, the first communication device may identify the second communication device based on the synchronization sequence and determine a CSI feedback value based on the control channel message.

In the method for transmitting control channel provided by the embodiment of the present application, the second communication device may transmit the synchronization sequence before transmitting the control channel message, the first communication device may perform the synchronization procedure only when it needs to receive the control channel message, and does not need to be synchronized with the second communication device all the time, which may reduce the power consumption of the device. In addition, the first communication device is able to quickly establish synchronization with the second communication device and receive the control channel message, which achieves a low-complexity fast access procedure.

In an embodiment, receiving the synchronization sequence transmitted from the second communication device includes:
receiving a synchronization sequence and a control channel message continuously transmitted from the second communication device in a time domain.

In an embodiment, the second communication device may continuously transmit the synchronization sequence and control channel message to the first communication device in the time domain. For example, in a central control mode, the base station may transmit a control channel including a synchronization sequence and a control channel message to the terminal, and the synchronization sequence and control channel message in the control channel are continuously transmitted in the time domain.

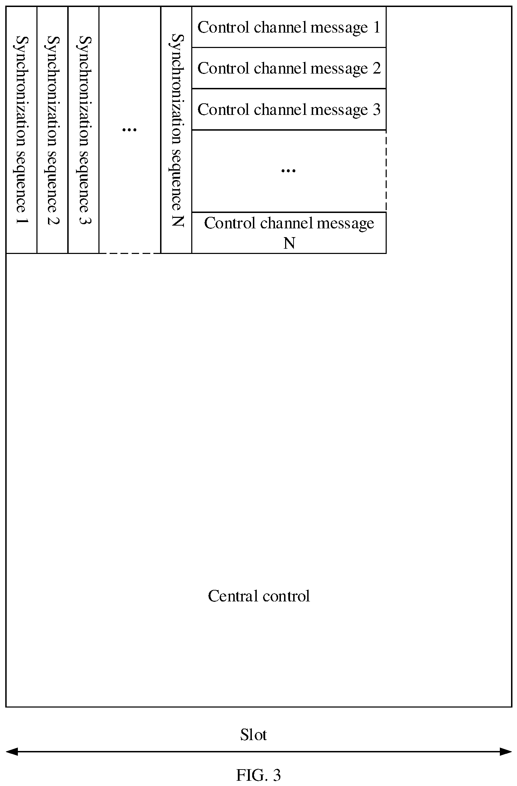

FIG. 3 is a schematic diagram of a control channel in a central control mode according to an embodiment of the present application. The central control mode may refer to that the resources used by the transmitter device are pre-configured or configured by a central control node. As shown in FIG. 3, taking the base station transmitting a control channel to a terminal as an example, the base station transmits a control channel including a synchronization sequence and a control channel message to the terminal. The two stages of the control channel may be in a slot or subframe, or may be at least continuous in time. That is, in the central control mode, the control channel may be transmitted in one step.

In an embodiment, receiving the synchronization sequence transmitted from the second communication device includes:
receiving a first synchronization sequence transmitted from the second communication device, where the first synchronization sequence includes frequency resource occupancy information of the second communication device; and
receiving the control channel message transmitted from the second communication device includes:
   transmitting a second synchronization sequence to the second communication device, where the second synchronization sequence includes feedback information of the first communication device on the frequency resource occupancy information of the second communication device; and
   receiving the control channel message transmitted from the second communication device.

In an embodiment, the second communication device may firstly transmit a first synchronization sequence to the first communication device, the first synchronization sequence includes the frequency resource occupancy information of the second communication device. After receiving the first synchronization sequence, the first communication device may synchronize with the second communication device based on the first synchronization sequence, and transmit a second synchronization sequence to the second communication device, where the second synchronization sequence includes the feedback information of the first communication device to the frequency resource occupancy information of the second communication device. For example, if the second synchronization sequence transmitted from the first communication device indicates positive feedback information, that is, it indicates that the second communication device may occupy the frequency resource indicated by the first synchronization sequence, then the second communication device may continue to transmit the control channel message to the first communication device.

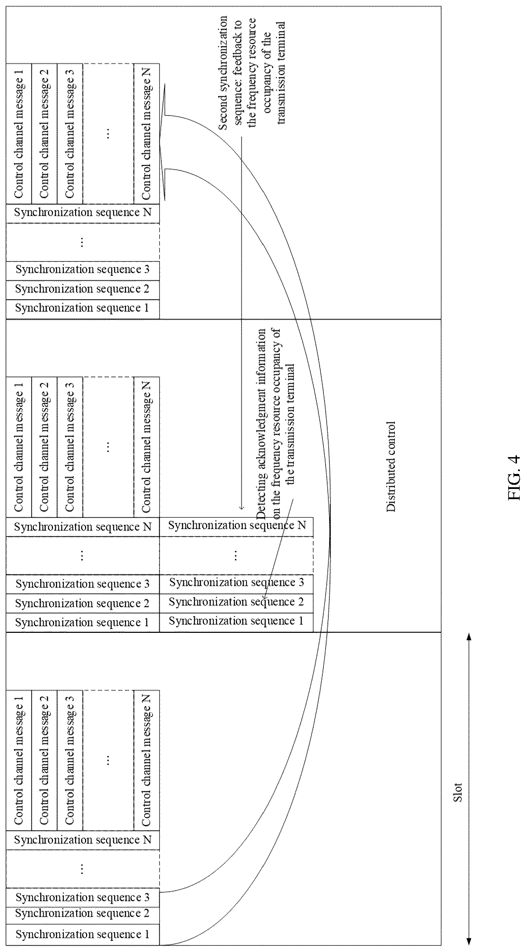

FIG. 4 is a schematic diagram of a control channel in a distributed control mode according to an embodiment of the present application. The distributed control mode may refer to that the resources used by the transmitter device are obtained from a resource pool through sounding and contention mechanisms. As shown in FIG. 4, taking the sidelink communication scenario between terminals as an example, a transmission terminal may firstly transmit a first synchronization sequence to a reception terminal, and the first synchronization sequence includes the frequency resource occupancy information of the transmission terminal. The reception terminal then synchronizes with the transmission terminal based on the first synchronization sequence, and transmits a second synchronization sequence to the transmission terminal. The second synchronization sequence includes acknowledgment (ACK) information on the frequency resource occupancy of the transmission terminal. After receiving the second synchronization sequence, the transmission terminal may further transmit a control channel message to the reception terminal. That is, in the distributed control mode, the control channel may be transmitted in two steps.

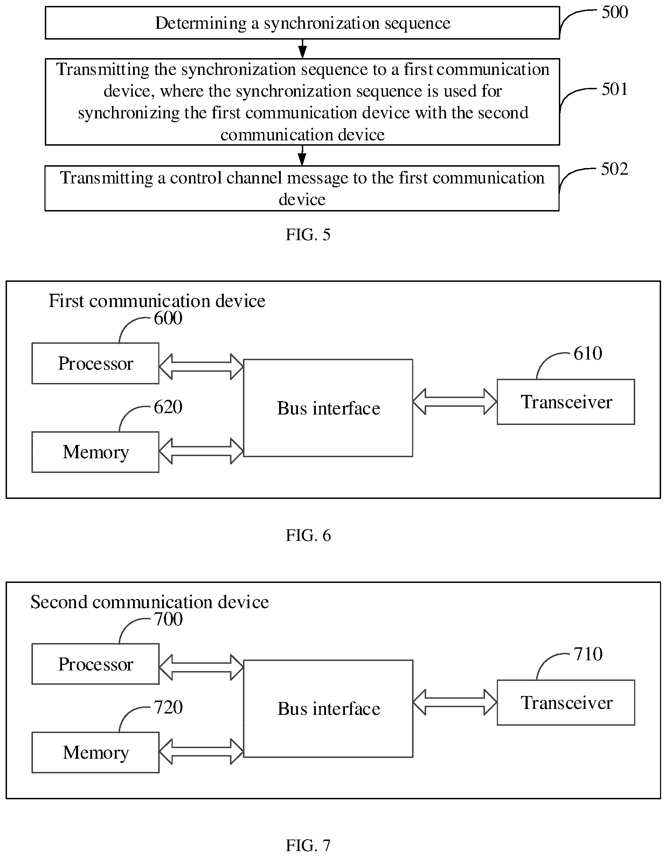

FIG. 5 is a second schematic flowchart of a method for transmitting control channel according to an embodiment of the present application. The method is performed by a second communication device. As shown in FIG. 5, the method includes the following steps.

Step 500: determining a synchronization sequence.

Step 501: transmitting the synchronization sequence to a first communication device, where the synchronization sequence is used for synchronizing the first communication device with the second communication device.

Step 502: transmitting a control channel message to the first communication device.

In an embodiment, the first communication device may include a terminal whose peer end transmission entity is a base station, or a reception terminal whose peer end transmission entity is a transmission terminal.

In an embodiment, the second communication device may include a base station or a terminal.

In an embodiment, the base station may be an access point (AP) with access network side functions.

In an embodiment, the second communication device may transmit a synchronization sequence before transmitting the control channel message in case that it needs to transmit a control channel message to the first communication device. The synchronization sequence may be used for synchronizing the first communication device with the second communication device.

For example, the second communication device may determine a synchronization sequence transmitted to the first communication device according to the type of the control channel or information on the identifier of the first communication device, and then transmit the determined synchronization sequence to the first communication device. The first communication device may synchronize with the second communication device based on the received synchronization sequence and receive the control channel message transmitted from the second communication device.

In an embodiment, taking the first communication device being a terminal and the second communication device being a base station as an example, the base station may include a synchronization sequence in the downlink control channel. After receiving the synchronization sequence transmitted from the base station in the downlink control channel, the terminal may perform downlink synchronization based on the synchronization sequence and receive the control channel message transmitted from the base station.

In an embodiment, taking the first communication device being a terminal and the second communication device being a terminal, that is, a sidelink communication scenario between terminals as an example, a transmission terminal may transmit a control channel including a synchronization sequence to a reception terminal. After receiving the control channel, the reception terminal may synchronize with the transmission terminal based on the synchronization sequence in the control channel and receive the control channel message transmitted from the transmission terminal.

In an embodiment, the synchronization sequence transmitted from the second communication device to the first communication device may include one or more pieces of the following information.

### (1) An identifier (ID) of the first communication device and/or an identifier of the second communication device

In an embodiment, the identifier of the first communication device and/or the identifier of the second communication device may be used for identifying a transmitter device and/or a receiver device for the synchronization sequence. The identifier may be a full or truncated identifier, such as a full or truncated ID of the base station and/or ID of the terminal (also collectively referred to as AP ID). The first communication device may determine the transmitter device and/or the receiver device for the synchronization sequence based on the identifier of the first communication device and/or the identifier of the second communication device included in the synchronization sequence.

In an embodiment, the synchronization sequence may or may not include the identifier of the first communication device and/or the identifier of the second communication device. Taking the base station transmitting the synchronization sequence to the terminal as an example, there may be possible implementations as follows.

For example, in case that the base station transmits a broadcast message, the synchronization sequence is a sequence corresponding to the broadcast message, and the synchronization sequence may not include the ID of the base station and the ID of the terminal.

For example, in case that the terminal needs to learn which base station transmits the control channel, the synchronization sequence may include the ID of the base station and the ID of the terminal (the ID of the base station and the ID of the terminal may be full or truncated IDs).

For example, in case that the terminal does not need to learn which base station transmits the control channel, the synchronization sequence may only include the ID of the terminal (the ID of the terminal may be full or truncated IDs).

### (2) Frequency resource occupancy information of the second communication device

In an embodiment, the frequency resource occupancy information of the second communication device may be used for indicating all available uplink and downlink frequency resources of the second communication device. In case that the synchronization sequence includes the frequency resource occupancy information, the first communication device may determine the frequency resources occupied by the second communication device based on the frequency resource occupancy information to receive the subsequent control channel message.

In an embodiment, the terminal side may also transmit the terminal side information to the base station side using a same control channel format as the base station side. As such, the synchronization sequence stage transmitted from the terminal side may mainly include information on the ID of the terminal, which is used for the base station to identify the terminal. The synchronization sequence may also be used by the base station to measure and estimate the uplink synchronization timing deviation and determine whether uplink synchronization adjustment is required.

In an embodiment, the control channel message may include one or more pieces of the following information.

### (1) Resource scheduling information

In an embodiment, the resource scheduling information may be used for indicating time-frequency domain resources occupied by the second communication device performing transmission to the first communication device, a transmission format and other information, or for indicating time-frequency domain resources occupied by the first communication device for performing transmission to the second communication device, a transmission format and other information.

For example, the resource scheduling information may be downlink resource scheduling information transmitted from the base station to the terminal, which may be used for indicating time-frequency domain resources occupied by the base station for performing transmission to the terminal, a transmission format, etc. The terminal may receive the downlink transmission from the base station based on the resource scheduling information.

For example, the resource scheduling information may be uplink resource scheduling information transmitted from the terminal to the base station, which may be used for indicating time-frequency domain resources occupied by the terminal for performing transmission to the base station, a transmission format, etc. The terminal may transmit the uplink transmission to the base station based on the resource scheduling information.

### (2) Pre-configured resource information

In an embodiment, the pre-configured resource information may be used for indicating data transmission resources reserved by the second communication device for the first communication device.

For example, the pre-configured resource information transmitted from the base station to the terminal may be used for indicating data transmission resources pre-configured by the base station for the terminal.

### (3) Indication information of a hybrid automatic repeat request-acknowledgment (HARQ-ACK) feedback resource of a peer end

In an embodiment, the indication information of the HARQ-ACK feedback resource of the peer end may be used for indicating a transmission resource (such as a time offset, or a time domain resource, or a time-frequency domain resource, etc.) used by the first communication device to feed back the HARQ-ACK.

For example, in case that the second communication device requires the first communication device to transmit HARQ-ACK feedback, the second communication device may carry the indication information of the above HARQ-ACK feedback resource in the control channel message, and the first communication device may perform HARQ-ACK feedback on the transmission resource indicated by the indication information.

### (4) HARQ-ACK feedback information

In an embodiment, the HARQ-ACK feedback information may be used for indicating the HARQ-ACK feedback of the second communication device to the control channel transmitted from the first communication device.

For example, after receiving the uplink or downlink transmission transmitted from the first communication device, the second communication device may carry the HARQ-ACK feedback information in the control channel message to indicate the HARQ-ACK feedback of the second communication device to the uplink or downlink transmission transmitted from the first communication device.

### (5) Channel state information (CSI) feedback information

In an embodiment, the CSI feedback information may be used for indicating the CSI fed back by the second communication device to the first communication device.

For example, after performing channel quality measurement, the second communication device may transmit a control channel to the first communication device. The control channel includes a synchronization sequence and a control channel message. The control channel message includes CSI feedback information. After receiving the control channel transmitted from the second communication device, the first communication device may identify the second communication device based on the synchronization sequence and determine a CSI feedback value based on the control channel message.

In the method for transmitting control channel provided by the embodiment of the present application, the second communication device may transmit the synchronization sequence before transmitting the control channel message, the first communication device may perform the synchronization procedure only when it needs to receive the control channel message, and does not need to be synchronized with the second communication device all the time, which may reduce the power consumption of the device. In addition, the first communication device to quickly establish synchronization with the second communication device and receive the control channel message, which achieves a low-complexity fast access procedure.

In an embodiment, transmitting the synchronization sequence to the first communication device includes:
transmitting the synchronization sequence and a control channel message continuously to the first communication device in a time domain.

In an embodiment, the second communication device may continuously transmit the synchronization sequence and control channel message to the first communication device in the time domain.

For example, in the central control mode, taking the base station transmitting a control channel to a terminal as an example, the base station transmits a control channel including a synchronization sequence and a control channel message to the terminal. The two stages of the control channel may be in a slot or subframe, or may be at least continuous in time. That is, in the central control mode, the control channel may be transmitted in one step.

In an embodiment, transmitting the synchronization sequence to the first communication device includes:
transmitting a first synchronization sequence to the first communication device, where the first synchronization sequence includes frequency resource occupancy information of the second communication device; and
transmitting the control channel message to the first communication device includes:
   receiving a second synchronization sequence transmitted from first communication device, where the second synchronization sequence includes feedback information of the first communication device on the frequency resource occupancy information of the second communication device; and
   transmitting the control channel message to the first communication device based on the second synchronization sequence.

In an embodiment, the second communication device may firstly transmit a first synchronization sequence to the first communication device, the first synchronization sequence includes the frequency resource occupancy information of the second communication device. After receiving the first synchronization sequence, the first communication device may synchronize with the second communication device based on the first synchronization sequence, and transmit a second synchronization sequence to the second communication device, where the second synchronization sequence includes the feedback information of the first communication device to the frequency resource occupancy information of the second communication device. For example, if the second synchronization sequence transmitted from the first communication device indicates positive feedback information, that is, it indicates that the second communication device may occupy the frequency resource indicated by the first synchronization sequence, then the second communication device may continue to transmit the control channel message to the first communication device.

Taking the sidelink communication scenario between terminals as an example, a transmission terminal may firstly transmit a first synchronization sequence to a reception terminal, and the first synchronization sequence includes the frequency resource occupancy information of the transmission terminal. The reception terminal then synchronizes with the transmission terminal based on the first synchronization sequence, and transmits a second synchronization sequence to the transmission terminal. The second synchronization sequence includes acknowledgement (ACK) information on the frequency resource occupancy of the transmission terminal. After receiving the second synchronization sequence, the transmission terminal may further transmit a control channel message to the reception terminal. That is, in the distributed control mode, the control channel may be transmitted in two steps.

The methods provided by the embodiments of the present application are based on the same application concept, the implementation of each method may refer to each other, and the repetition is not repeated.

The methods provided by the above embodiments of the present application are illustrated below by examples under specific application scenarios.

Embodiment 1: The base station schedules downlink transmission to the terminal.

Step 1: the base station transmits a control channel to the terminal, and the control channel includes a synchronization sequence and a control channel message, where the synchronization sequence and the control channel message respectively include the following.

### (1) Synchronization sequence

The synchronization sequence may or may not include the ID of the base station and/or the ID of the terminal, which may be one of the following situations.
A: in case that the base station transmits a broadcast message, the synchronization sequence is a sequence corresponding to the broadcast message, and the synchronization sequence may not include the ID of the base station and the ID of the terminal.
B: in case that the terminal needs to learn which base station transmits the control channel, the synchronization sequence may include the ID of the base station and the ID of the terminal (the ID may be the truncated ID).
C: in case that the terminal does not need to learn which base station transmits the control channel, the synchronization sequence may only include the ID of the terminal (the ID of the terminal may be the truncated ID).

In an embodiment, the synchronization sequence may include the frequency resource occupancy information of the base station.

### (2) Control channel message

The control channel message may include downlink resource scheduling information, i.e., the time-frequency resources occupied by the base station for performing transmission to the terminal, a transmission format, etc.

In an embodiment, the control channel message may include pre-configured resource information, i.e., the data transmission resources pre-configured by the base station for the terminal.

Step 2: the terminal receives the control channel and performs downlink synchronization based on the synchronization sequence in the control channel. The terminal further parses the downlink resource scheduling information in the control channel message.

Step 3: the base station transmits downlink transmission based on the downlink resources and the transmission format indicated by the control channel.

In an embodiment, in case that uplink synchronization is required, the base station may transmit a TAC to the terminal in the downlink transmission. The specific situation may include: the terminal needs to transmit HARQ feedback, or subsequently transmit uplink transmission, or the base station estimates the uplink synchronization adjustment amount based on the sounding reference signal (SRS) or other reference signals (such as the AP-RS for the terminal) transmitted from the terminal in the early stage, and determines that the terminal needs to perform uplink synchronization adjustment. In case that a downlink transmission unit of the base station is very close to the terminal, it may be considered that uplink synchronization is achieved after downlink synchronization, and no additional TAC transmitting procedure is required.

In an embodiment, in case that the terminal needs to transmit feedback on downlink transmission, the base station may include indication information of the resources (such as time offset, time domain resources, or time-frequency domain resources) used by the terminal to transmit HARQ feedback in the control channel message.

Step 4 (optional): the terminal performs uplink synchronization adjustment based on the indication of step 3, and transmits HARQ feedback for downlink transmission. The specific mode for transmitting HARQ feedback may adopt the method for transmitting control channel provided by each embodiment of the present application, which indicates that the transmitter device is a terminal in the synchronization sequence stage, and the control channel message stage includes HARQ feedback.

Embodiment 2: The base station schedules uplink transmission to the terminal.

Step 0 (optional): the terminal transmits an uplink scheduling request to the base station, and the base station evaluates the uplink timing deviation based on the uplink scheduling request from the terminal, adjusts the uplink timing of a specific terminal, or transmits uplink synchronization timing adjustment information to the terminal in advance.

Step 1: the base station transmits a control channel to the terminal. The control channel includes a synchronization sequence and a control channel message. The synchronization sequence and the control channel message respectively include the following.

### (1) Synchronization sequence

The synchronization sequence may include the ID of the base station and/or the ID of the terminal, which may be one of the following situations.
A: in case that the terminal needs to learn which base station transmits the control channel, the synchronization sequence may include the ID of the base station and the ID of the terminal (the ID may be the truncated ID).
B: in case that the terminal does not need to learn which base station transmits the control channel, the synchronization sequence may only include the ID of the terminal (the ID of the terminal may be the truncated ID).

In an embodiment, the synchronization sequence may include the frequency resource occupancy information of the base station.

### (2) Control channel message

The control channel message may include uplink resource scheduling information, i.e., the time-frequency resources occupied by the terminal for performing transmission to the base station, a transmission format, etc.

In an embodiment, the control channel message may include pre-configured resource information, i.e., the data transmission resources pre-configured by the base station for the terminal.

Step 2: the terminal receives the control channel and performs downlink synchronization based on the synchronization sequence in the control channel. The terminal further parses the uplink resource scheduling information in the control channel message.

Step 3: the terminal transmits uplink transmission based on the uplink resources and the transmission format indicated by the control channel.

Step 4 (optional): the base station transmits a control channel to the terminal, and the control channel message stage of the control channel carries HARQ feedback on the uplink transmission for the terminal.

Embodiment 3: The terminal transmits CSI feedback.

Step 1: the terminal transmits a control channel to the base station. The control channel includes a synchronization sequence and a control channel message. The synchronization sequence and the control channel message respectively include the following.

### (1) Synchronization sequence

The synchronization sequence may include the ID of the base station and/or the ID of the terminal, which may be one of the following situations.
A: in case that the terminal needs to learn which base station transmits the control channel, the synchronization sequence may include the ID of the base station and the ID of the terminal (the ID may be the truncated ID).
B: in case that the terminal does not need to learn which base station transmits the control channel, the synchronization sequence may only include the ID of the terminal (the ID of the terminal may be the truncated ID).

### (2) Control channel message

The control channel message includes CSI feedback.

Step 2: the base station receives the control channel transmitted from the terminal, identifies the terminal based on the synchronization sequence, and determines the CSI feedback value based on the control channel message stage.

Embodiment 4: preemption-based distributed control.

Step 1: a transmitter device transmits a first synchronization sequence to a receiver device, and the first synchronization sequence includes the following.
(1) The first synchronization sequence may or may not include the ID of the transmitter device and/or the ID of the receiver device, which may be one of the following situations.
   A: in case that the transmitter device transmits a broadcast message, the first synchronization sequence is a sequence corresponding to the broadcast message, and the synchronization sequence may not include the ID of the transmitter device and the ID of the receiver device.
   B: in case that the receiver device needs to learn which transmitter device transmits the control channel, the first synchronization sequence may include the ID of the transmitter device and the ID of the receiver device (the ID may be the truncated ID).
   C: in case that the receiver device does not need to learn which transmitter device transmits the control channel, the first synchronization sequence may only include the ID of the receiver device (the ID may be the truncated ID).
(2) The first synchronization sequence includes the frequency resource occupancy information of the transmitter device.

Step 2: the receiver device receives the first synchronization sequence transmitted from the transmitter device, synchronizes with the transmitter device, and transmits a second synchronization sequence to the transmitter device, where the second synchronization sequence includes the following.
(1) The second synchronization sequence includes the ID of the transmitter device and/or the ID of the receiver device, which is one of the following situations.
   A: in case that the receiver device needs to learn the feedback is for which receiver device, the second synchronization sequence includes the ID of the transmitter device and the ID of the receiver device (the ID may be the truncated ID).
   B: in case that the receiver device does need to learn the feedback is for which receiver device, the second synchronization sequence only includes the ID of the receiver device (the ID may be the truncated ID).
(2) The second synchronization sequence includes feedback information on the frequency resource occupancy information of the transmitter device.

Step 3: the transmitter device receives feedback from the receiver device on its frequency resource occupancy information. If the feedback is positive feedback (ACK), it is determined that the transmitter device may occupy the resources reserved in step 1, and the transmitter device continues to transmit a control channel message. The control channel message includes one or more pieces of the following information:
(1) resource scheduling information of the transmitter device, or resource scheduling information allocated by the transmitter device to the receiver device (for example, in case that the transmitter device is a scheduling node that schedules other nodes);
(2) indication information of the HARQ-ACK feedback resource (a time offset, or a time domain resource, or a time-frequency domain resource) of a peer end;
(3) HARQ-ACK feedback information; or
(4) feedback information of channel quality measurement (such as CSI feedback information).

Step 4: in case that there is resource scheduling information in step 3, the receiver device receives or transmits data transmission based on the resource scheduling information.

The methods and the devices are based on the same application concept, the implementation of the devices and the methods can be referred to each other since the principles of the methods and the devices are similar, and the repetition is not repeated.

FIG. 6 is a schematic structural diagram of a first communication device according to an embodiment of the present application. As shown in FIG. 6, the first communication device includes a memory 620, a transceiver 610 and a processor 600, where the processor 600 and the memory 620 may also be arranged physically separately.

The memory 620 is used for storing computer programs, and the transceiver 610 is used for receiving and transmitting data under the control of the processor 600.

The transceiver 610 is used for receiving and transmitting data under the control of the processor 600.

In FIG. 6, a bus architecture may include any number of interconnected buses and bridges, which are linked together through various circuits of one or more processors represented by processor 600 and one or more memories represented by the memory 620. The bus architecture may also link together various other circuits, such as peripherals, voltage regulators, and power management circuits, which are well known in the art, and therefore would not be further described in the present application. The bus interface provides an interface. The transceiver 610 may be multiple elements, i.e., including a transmitter and a receiver, units for providing communication with various other devices over transmission media including wireless channels, wired channels, fiber optic cables, and the like.

The processor 600 is responsible for managing the bus architecture and general processing, and the memory 620 may store data used by the processor 600 when performing operations.

The processor 600 may be a central processing unit (CPU), an application specific integrated circuit (ASIC), a field-programmable gate array (FPGA), or a complex programmable logic device (CPLD), the processor can also use a multi-core architecture.

The processor 600 performs any of the methods provided in the embodiments of the present application based on obtained executable instructions by calling the computer program stored in the memory 620, for example, receiving a synchronization sequence transmitted from a second communication device; synchronizing with the second communication device based on the synchronization sequence; and receiving a control channel message transmitted from the second communication device.

In an embodiment, the synchronization sequence transmitted from the second communication device includes one or more pieces of the following information:
an identifier of the first communication device and/or an identifier of the second communication device; and
frequency resource occupancy information of the second communication device.

In an embodiment, receiving the synchronization sequence transmitted from the second communication device includes:
receiving a synchronization sequence and a control channel message continuously transmitted from the second communication device in a time domain.

In an embodiment, receiving the synchronization sequence transmitted from the second communication device includes:
receiving a first synchronization sequence transmitted from the second communication device, where the first synchronization sequence includes frequency resource occupancy information of the second communication device;
receiving the control channel message transmitted from the second communication device includes:
   transmitting a second synchronization sequence to the second communication device, where the second synchronization sequence includes feedback information of the first communication device on the frequency resource occupancy information of the second communication device; and
   receiving the control channel message transmitted from the second communication device.

In an embodiment, the control channel message includes one or more pieces of the following information:
resource scheduling information;
pre-configured resource information;
indication information of a hybrid automatic repeat request-acknowledgment (HARQ-ACK) feedback resource of a peer end;
hybrid automatic repeat request-acknowledgment (HARQ-ACK) feedback information; or
channel state information (CSI) feedback information.

In an embodiment, the first communication device includes a terminal whose peer end transmission entity is a base station, or a reception terminal whose peer end transmission entity is a transmission terminal.

FIG. 7 is a schematic structural diagram of a second communication device according to an embodiment of the present application. As shown in FIG. 7, the second communication device includes a memory 720, a transceiver 710 and a processor 700, where the processor 700 and the memory 720 may also be arranged physically separately.

The memory 720 is used for storing computer programs, and the transceiver 710 is used for receiving and transmitting data under the control of the processor 700.

The transceiver 710 is used for receiving and transmitting data under the control of the processor 700.

In FIG. 7, a bus architecture may include any number of interconnected buses and bridges, which are linked together through various circuits of one or more processors represented by processor 700 and one or more memories represented by the memory 720. The bus architecture may also link together various other circuits, such as peripherals, voltage regulators, and power management circuits, which are well known in the art, and therefore would not be further described in the present application. The bus interface provides an interface. The transceiver 710 may be multiple elements, i.e., including a transmitter and a receiver, units for providing communication with various other devices over transmission media including wireless channels, wired channels, fiber optic cables, and the like.

The processor 700 is responsible for managing the bus architecture and general processing, and the memory 720 may store data used by the processor 700 when performing operations.

The processor 700 may be a CPU, ASIC, FPGA or CPLD, and the processor may also use a multi-core architecture.

The processor 700 performs any of the methods provided in the embodiments of the present application based on obtained executable instructions by calling the computer program stored in the memory 720, for example, determining a synchronization sequence; transmitting the synchronization sequence to a first communication device, where the synchronization sequence is used for synchronizing the first communication device with the second communication device; and transmitting a control channel message to the first communication device.

In an embodiment, the synchronization sequence transmitted to the first communication device includes one or more pieces of the following information:
an identifier of the first communication device and/or an identifier of the second communication device; and
frequency resource occupancy information of the second communication device.

In an embodiment, transmitting the synchronization sequence to the first communication device includes:
transmitting the synchronization sequence and a control channel message continuously to the first communication device in a time domain.

In an embodiment, transmitting the synchronization sequence to the first communication device includes:
transmitting a first synchronization sequence to the first communication device, where the first synchronization sequence includes frequency resource occupancy information of the second communication device; and
transmitting the control channel message to the first communication device includes:
   receiving a second synchronization sequence transmitted from first communication device, where the second synchronization sequence includes feedback information of the first communication device on the frequency resource occupancy information of the second communication device; and
   transmitting the control channel message to the first communication device based on the second synchronization sequence.

In an embodiment, the control channel message includes one or more pieces of the following information:
resource scheduling information;
pre-configured resource information;
indication information of a hybrid automatic repeat request-acknowledgment (HARQ-ACK) feedback resource of a peer end;
hybrid automatic repeat request-acknowledgment (HARQ-ACK) feedback information; or
channel state information (CSI) feedback information.

In an embodiment, the second communication device includes a base station or a terminal.

It should be noted here that the above-mentioned first communication device and the second communication device according to the embodiments of the present application may implement all the method steps implemented by the above-mentioned method embodiments, and may achieve the same effect. The same parts and beneficial effects as the same method embodiments would not be repeated here.

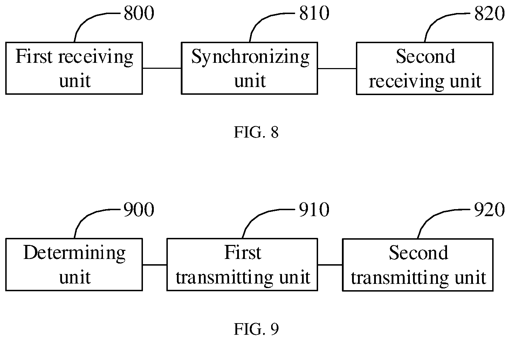

FIG. 8 is a first schematic structural diagram of an apparatus for transmitting control channel according to an embodiment of the present application. The apparatus is applied to a first communication device. As shown in FIG. 8, the apparatus includes:
a first receiving unit 800, used for receiving a synchronization sequence transmitted from a second communication device;
a synchronizing unit 810, used for synchronizing with the second communication device based on the synchronization sequence; and
a second receiving unit 820, used for receiving a control channel message transmitted from the second communication device.

In an embodiment, the synchronization sequence transmitted from the second communication device includes one or more pieces of the following information:
an identifier of the first communication device and/or an identifier of the second communication device; and
frequency resource occupancy information of the second communication device.

In an embodiment, receiving the synchronization sequence transmitted from the second communication device includes:
receiving a synchronization sequence and a control channel message continuously transmitted from the second communication device in a time domain.

In an embodiment, receiving the synchronization sequence transmitted from the second communication device includes:
receiving a first synchronization sequence transmitted from the second communication device, where the first synchronization sequence includes frequency resource occupancy information of the second communication device; and
receiving the control channel message transmitted from the second communication device includes:
   transmitting a second synchronization sequence to the second communication device, where the second synchronization sequence includes feedback information of the first communication device on the frequency resource occupancy information of the second communication device; and
   receiving the control channel message transmitted from the second communication device.

In an embodiment, the control channel message includes one or more pieces of the following information:
resource scheduling information;
pre-configured resource information;
indication information of a hybrid automatic repeat request-acknowledgment (HARQ-ACK) feedback resource of a peer end;
hybrid automatic repeat request-acknowledgment (HARQ-ACK) feedback information; or
channel state information (CSI) feedback information.

In an embodiment, the first communication device includes a terminal whose peer end transmission entity is a base station, or a reception terminal whose peer end transmission entity is a transmission terminal.

FIG. 9 is a second schematic structural diagram of an apparatus for transmitting control channel according to an embodiment of the present application. The apparatus is applied to a second communication device. As shown in FIG. 9, the apparatus includes:
a determining unit 900, used for determining a synchronization sequence;
a first transmitting unit 910, used for transmitting the synchronization sequence to a first communication device, where the synchronization sequence is used for synchronizing the first communication device with the second communication device; and
a second transmitting unit 920, used for transmitting a control channel message to the first communication device.

In an embodiment, the synchronization sequence transmitted to the first communication device includes one or more pieces of the following information:
an identifier of the first communication device and/or an identifier of the second communication device; and
frequency resource occupancy information of the second communication device.

In an embodiment, transmitting the synchronization sequence to the first communication device includes:
transmitting the synchronization sequence and a control channel message continuously to the first communication device in a time domain.

In an embodiment, transmitting the synchronization sequence to the first communication device includes:
transmitting a first synchronization sequence to the first communication device, where the first synchronization sequence includes frequency resource occupancy information of the second communication device; and
transmitting the control channel message to the first communication device includes:
   receiving a second synchronization sequence transmitted from first communication device, where the second synchronization sequence includes feedback information of the first communication device on the frequency resource occupancy information of the second communication device; and
   transmitting the control channel message to the first communication device based on the second synchronization sequence.

In an embodiment, the control channel message includes one or more pieces of the following information:
resource scheduling information;
pre-configured resource information;
indication information of a hybrid automatic repeat request-acknowledgment (HARQ-ACK) feedback resource of a peer end;
hybrid automatic repeat request-acknowledgment (HARQ-ACK) feedback information; or
channel state information (CSI) feedback information.

In an embodiment, the second communication device includes a base station or a terminal.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as U disk, mobile hard disk, read-only memory (ROM), random access memory (RAM), magnetic disk, or a compact disk.

It should be noted here that the above-mentioned apparatus according to the embodiments of the present application can implement all the method steps implemented by the above-mentioned method embodiments, and can achieve the same effect. The same parts and beneficial effects as the same method embodiments would not be repeated here.

An embodiment of the present application further provides a computer-readable storage medium storing a computer program that causes a computer to perform the method for transmitting control channel described above.

It should be noted here that the above-mentioned computer-readable storage medium according to the embodiments of the present application may implement all the method steps implemented by the above-mentioned method embodiments, and may achieve the same effect. The same parts and beneficial effects as the same method embodiments would not be repeated here.

The computer-readable storage medium may be any available medium or data storage device that can be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

The solutions according to the embodiments of the present application may be applicable to various systems, especially 5G systems. For example, applicable systems may be a global system of mobile communication (GSM) system, a code division multiple access (CDMA) system, a wideband code division multiple access (WCDMA) general packet wireless service (general packet radio service, GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a user equipment and a network side device. The system may also include a core network part, such as an evolved packet system (EPS), a 5G system (5GS), and the like.

The terminal in the embodiments of the present application may be a device that provides voice and/or data connectivity to a user, a handheld device with a wireless connection function, or other processing device connected to a wireless modem. In different systems, the names of the terminal may be different. For example, in the 5G system, the terminal may be called as user equipment (UE). A wireless terminal may communicate with one or more core networks (CN) via a radio access network (RAN), and the wireless terminal may be a mobile terminal, such as a mobile phone (or "cellular "phone) and computers with mobile terminal, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, and a user device, which are not limited in the embodiments of the present application.

As would be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It should be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It would be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for transmitting control channel, performed by a first communication device, comprising:
receiving a synchronization sequence transmitted from a second communication device;
synchronizing with the second communication device based on the synchronization sequence; and
receiving a control channel message transmitted from the second communication device.

2. The method of claim 1, wherein the synchronization sequence transmitted from the second communication device comprises one or more pieces of the following information:
an identifier of the first communication device and/or an identifier of the second communication device; or
frequency resource occupancy information of the second communication device.

3. The method of claim 1 or 2, wherein receiving the synchronization sequence transmitted from the second communication device comprises:
receiving a synchronization sequence and a control channel message continuously transmitted from the second communication device in a time domain.

4. The method of claim 1 or 2, wherein receiving the synchronization sequence transmitted from the second communication device comprises:
receiving a first synchronization sequence transmitted from the second communication device, wherein the first synchronization sequence includes frequency resource occupancy information of the second communication device; and
receiving the control channel message transmitted from the second communication device comprises:
transmitting a second synchronization sequence to the second communication device, wherein the second synchronization sequence includes feedback information of the first communication device on the frequency resource occupancy information of the second communication device; and
receiving the control channel message transmitted from the second communication device.

5. The method of claim 1, wherein the control channel message comprises one or more pieces of the following information:
resource scheduling information;
pre-configured resource information;
indication information of a hybrid automatic repeat request-acknowledgment, HARQ-ACK, feedback resource of a peer end;
hybrid automatic repeat request-acknowledgment, HARQ-ACK, feedback information; or
channel state information, CSI, feedback information.

6. The method of claim 1, wherein the first communication device comprises a terminal whose peer end transmission entity is a base station, or a reception terminal whose peer end transmission entity is a transmission terminal.

7. A method for transmitting control channel, performed by a second communication device, comprising:
determining a synchronization sequence;
transmitting the synchronization sequence to a first communication device, wherein the synchronization sequence is used for synchronizing the first communication device with the second communication device; and
transmitting a control channel message to the first communication device.

8. The method of claim 7, wherein the synchronization sequence transmitted to the first communication device comprises one or more pieces of the following information:
an identifier of the first communication device and/or an identifier of the second communication device; or
frequency resource occupancy information of the second communication device.

9. The method of claim 7 or 8, wherein transmitting the synchronization sequence to the first communication device comprises:
transmitting the synchronization sequence and a control channel message continuously to the first communication device in a time domain.

10. The method of claim 7 or 8, wherein transmitting the synchronization sequence to the first communication device comprises:
transmitting a first synchronization sequence to the first communication device, wherein the first synchronization sequence includes frequency resource occupancy information of the second communication device; and
transmitting the control channel message to the first communication device comprises:
receiving a second synchronization sequence transmitted from the first communication device, wherein the second synchronization sequence includes feedback information of the first communication device on the frequency resource occupancy information of the second communication device; and
transmitting the control channel message to the first communication device based on the second synchronization sequence.

11. The method of claim 7, wherein the control channel message comprises one or more pieces of the following information:
resource scheduling information;
pre-configured resource information;
indication information of a hybrid automatic repeat request-acknowledgment, HARQ-ACK, feedback resource of a peer end;
hybrid automatic repeat request-acknowledgment, HARQ-ACK, feedback information; or
channel state information, CSI, feedback information.

12. The method of claim 7, wherein the second communication device comprises a base station or a terminal.

13. A first communication device, comprising a memory, a transceiver and a processor,
wherein the memory is used for storing a computer program, the transceiver is used for receiving and transmitting data under control of the processor, and the processor is used for reading the computer program in the memory and performing the following operations of:
receiving a synchronization sequence transmitted from a second communication device;
synchronizing with the second communication device based on the synchronization sequence; and
receiving a control channel message transmitted from the second communication device.

14. The first communication device of claim 13, wherein the synchronization sequence transmitted from the second communication device comprises one or more pieces of the following information:
an identifier of the first communication device and/or an identifier of the second communication device; or
frequency resource occupancy information of the second communication device.

15. The first communication device of claim 13 or 14, wherein receiving the synchronization sequence transmitted from the second communication device comprises:
receiving a synchronization sequence and a control channel message continuously transmitted from the second communication device in a time domain.

16. The first communication device of claim 13 or 14, wherein receiving the synchronization sequence transmitted from the second communication device comprises:
receiving a first synchronization sequence transmitted from the second communication device, wherein the first synchronization sequence including frequency resource occupancy information of the second communication device; and
receiving the control channel message transmitted from the second communication device comprises:
transmitting a second synchronization sequence to the second communication device, wherein the second synchronization sequence includes feedback information of the first communication device on the frequency resource occupancy information of the second communication device; and
receiving the control channel message transmitted from the second communication device.

17. The first communication device of claim 13, wherein the control channel message comprises one or more pieces of the following information:
resource scheduling information;
pre-configured resource information;
indication information of a hybrid automatic repeat request-acknowledgment, HARQ-ACK, feedback resource of a peer end;
hybrid automatic repeat request-acknowledgment, HARQ-ACK, feedback information; or
channel state information, CSI, feedback information.

18. The first communication device of claim 13, wherein the first communication device comprises a terminal whose peer end transmission entity is a base station, or a reception terminal whose peer end transmission entity is a transmission terminal.

19. A second communication device, comprising a memory, a transceiver and a processor,
wherein the memory is used for storing a computer program, the transceiver is used for receiving and transmitting data under control of the processor, and the processor is used for reading the computer program in the memory and performing the following operations of:
determining a synchronization sequence;
transmitting the synchronization sequence to a first communication device, wherein the synchronization sequence is used for synchronizing the first communication device with the second communication device; and
transmitting a control channel message to the first communication device.

20. The second communication device of claim 19, wherein the synchronization sequence transmitted to the first communication device comprises one or more pieces of the following information:
an identifier of the first communication device and/or an identifier of the second communication device; or
frequency resource occupancy information of the second communication device.

21. The second communication device of claim 19 or 20, wherein transmitting the synchronization sequence to the first communication device comprises:
transmitting the synchronization sequence and a control channel message continuously to the first communication device in a time domain.

22. The second communication device of claim 19 or 20, wherein transmitting the synchronization sequence to the first communication device comprises:
transmitting a first synchronization sequence to the first communication device, wherein the first synchronization sequence includes frequency resource occupancy information of the second communication device; and
transmitting the control channel message to the first communication device comprises:
receiving a second synchronization sequence transmitted from the first communication device, wherein the second synchronization sequence includes feedback information of the first communication device on the frequency resource occupancy information of the second communication device; and
transmitting the control channel message to the first communication device based on the second synchronization sequence.

23. The second communication device of claim 19, wherein the control channel message comprises one or more pieces of the following information:
resource scheduling information;
pre-configured resource information;
indication information of a hybrid automatic repeat request-acknowledgment, HARQ-ACK, feedback resource of a peer end;
hybrid automatic repeat request-acknowledgment, HARQ-ACK, feedback information; or
channel state information, CSI, feedback information.

24. The second communication device of claim 19, wherein the second communication device comprises a base station or a terminal.

25. An apparatus for transmitting control channel, applied to a first communication device, comprising:
a first receiving unit, used for receiving a synchronization sequence transmitted from a second communication device;
a synchronizing unit, used for synchronizing with the second communication device based on the synchronization sequence; and
a second receiving unit, used for receiving a control channel message transmitted from the second communication device.

26. The apparatus of claim 25, wherein the synchronization sequence transmitted from the second communication device comprises one or more pieces of the following information:
an identifier of the first communication device and/or an identifier of the second communication device; or
frequency resource occupancy information of the second communication device.

27. The apparatus of claim 25 or 26, wherein receiving the synchronization sequence transmitted from the second communication device comprises:
receiving a synchronization sequence and a control channel message continuously transmitted from the second communication device in a time domain.

28. The apparatus of claim 25 or 26, wherein receiving the synchronization sequence transmitted from the second communication device comprises:
receiving a first synchronization sequence transmitted from the second communication device, wherein the first synchronization sequence includes frequency resource occupancy information of the second communication device; and
receiving the control channel message transmitted from the second communication device comprises:
transmitting a second synchronization sequence to the second communication device, wherein the second synchronization sequence includes feedback information of the first communication device on the frequency resource occupancy information of the second communication device; and
receiving the control channel message transmitted from the second communication device.

29. The apparatus of claim 25, wherein the control channel message comprises one or more pieces of the following information:
resource scheduling information;
pre-configured resource information;
indication information of a hybrid automatic repeat request-acknowledgment, HARQ-ACK, feedback resource of a peer end;
hybrid automatic repeat request-acknowledgment, HARQ-ACK, feedback information; or
channel state information, CSI, feedback information.

30. The apparatus of claim 25, wherein the first communication device comprises a terminal whose peer end transmission entity is a base station, or a reception terminal whose peer end transmission entity is a transmission terminal.

31. An apparatus for transmitting control channel, applied to a second communication device, comprising:
a determining unit, used for determining a synchronization sequence;
a first transmitting unit, used for transmitting the synchronization sequence to a first communication device, wherein the synchronization sequence is used for synchronizing the first communication device with the second communication device; and
a second transmitting unit, used for transmitting a control channel message to the first communication device.

32. The apparatus of claim 31, wherein the synchronization sequence transmitted to the first communication device comprises one or more pieces of the following information:
an identifier of the first communication device and/or an identifier of the second communication device; or
frequency resource occupancy information of the second communication device.

33. The apparatus of claim 31 or 32, wherein transmitting the synchronization sequence to the first communication device comprises:
transmitting the synchronization sequence and a control channel message continuously to the first communication device in a time domain.

34. The apparatus of claim 31 or 32, wherein transmitting the synchronization sequence to the first communication device comprises:
transmitting a first synchronization sequence to the first communication device, wherein the first synchronization sequence includes frequency resource occupancy information of the second communication device; and
transmitting the control channel message to the first communication device comprises:
receiving a second synchronization sequence transmitted from the first communication device, wherein the second synchronization sequence includes feedback information of the first communication device on the frequency resource occupancy information of the second communication device; and
transmitting the control channel message to the first communication device based on the second synchronization sequence.

35. The apparatus of claim 31, wherein the control channel message comprises one or more pieces of the following information:
resource scheduling information;
pre-configured resource information;
indication information of a hybrid automatic repeat request-acknowledgment, HARQ-ACK, feedback resource of a peer end;
hybrid automatic repeat request-acknowledgment, HARQ-ACK, feedback information; or
channel state information, CSI, feedback information.

36. The apparatus of claim 31, wherein the second communication device comprises a base station or a terminal.

37. A computer-readable storage medium storing a computer program that causes a computer to perform the method of any of claims 1 to 6 or perform the method of any of claims 7 to 12.
